# EUROPEAN PATENT SPECIFICATION

(11) **EP 0 314 716 B1**
(45) Date of publication and mention of the grant of the patent: **17.08.1994**
(21) Application number: 88903658.8
(22) Date of filing: 01.04.1988
(51) Int. Cl.: H01R 13/703

(54) **ELECTRICAL CONNECTOR WITH SHUNT**
ELEKTRISCHER VERBINDER MIT SHUNT
CONNECTEUR ELECTRIQUE AVEC SHUNT

(30) Priority: 13.05.1987 US 49631; 13.05.1987 US 49633; 22.12.1987 US 136784
(43) Date of publication of application: 10.05.1989
(73) Proprietor: THE WHITAKER CORPORATION, Wilmington, Delaware 19808 (US)
(72) Inventor: SHAFFER, Howard, Richard, Millersburg, PA 17061 (US); YOHN, Brent, David, Newport, PA 17074 (US); DENLINGER, Keith, Robert, Lancaster, PA 17601 (US); RUDY, William, Jesse, Jr., Annville, PA 17003 (US); JENKINS, John, William, Greensboro, NC 27407 (US)
(74) Representative: Warren, Keith Stanley
(86) International application number: US8801003
(87) International publication number: WO8809070

(56) References cited:
- DE-A- 2 903 896
- FR-A- 2 082 370
- US-A- 3 990 768
- US-A- 4 224 486
- US-A- 4 557 542

## Description

The invention relates to a shunting insert assembly in combination with an electrical connector, in particular a connector including a receptacle and a plug which mate with each other to form electrical connections between groups of terminals carried by the receptacle and plug, the plug including a bridge contact or shunt engageable with a pair of plug terminals when the plug is disengaged from the receptacle. The pair of plug terminals may be connected to a remote sensor which provides an indication when the plug is disengaged from the receptacle.

The invention also relates to methods of making the shunting insert assembly.

Electrical connectors having terminals secured within the connector by resilient insulative latching arms which form part of the connector housing are used in applications where it is essential to have the terminals locked or held in place within the connector housing. Some connectors of this type employ secondary locking members which can be inserted into the mating face of a connector housing to engage the terminal latch arms which comprise an integral part of the housing. U.S. Patent 4,557,542 discloses one example of a connector of this type.

Movement of the plug into the receptacle forms initial connections between the plug and receptacle terminals and then moves the shunt away from the pair of plug terminals to break the connection, deactivate the sensor and thereby provide a remote indication that the plug and receptacle are properly mated with electrical connections formed between their respective terminals.

The invention may be used to actuate a sensor on an automobile dashboard to alert the operator that a plug and receptacle of a connector in the electrical system are improperly mated and require service. The connector may be part of an airbag safety system, and as such, the shunt may enable sensing of not only a totally disconnected condition, but also sensing of a partially mated condition such as if the connectors are gradually becoming disconnected; to this end it is preferred that the shunt bridge the pair of terminals prior to the complete electrical disconnection of the plug's terminals from the receptacle's terminals.

According to one aspect thereof the present invention consists in a shunting insert assembly in combination with an electrical connector, said insert assembly comprising: a dielectric insert member adapted to be received into and secured within an insert-receiving aperture of said connector (14) along a pair of electrical terminals therein; and a shunt means secured along a surface of said dielectric insert member for location proximate to said pair of terminals when said insert member is received in said aperture, said shunt means including a fixed end joined to said dielectric member and an opposed end not fixed to said dielectric member, and said shunt means including a deflectable section between said fixed end and said opposed end extending outwardly from said dielectric member, said deflectable section including a bridging member; adapted to be spring biased against contact portions of said pair of terminals when said insert member is received in said aperture, to establish an electrical commoning connection therebetween.

In the preferred embodiment of this invention, the dielectric insert member comprises a removable locking member which can be inserted into the connector housing from the forward or mating end thereof.

According to another aspect thereof the present invention consists in the method of making the shunting insert assembly, as that method is defined in claim 5 and according to another aspect thereof the invention consists in a method of making the shunting insert assembly, as that method is defined in claim 6.

In one embodiment the shunt means is secured to the dielectric insert member by cold staking to form a joint which is recessed below the dielectric insert member's surface. Opposing lock tabs at one end of the shunt means are first bent into a recess into the surface with their free ends adjacent a central boss. Then the plastic material of the central boss is bulk deformed by tooling over the free ends of the lock tabs, forming the recessed joint. The other end of the shunt means is free to move along the dielectric member's surface during deflection of the outwardly bowed central portion of the shunt means upon connector mating.

In another embodiment the resilient shunt means is assembled to a generally planar dielectric insert member by simply sliding shunt means parallel to a shunt means lengthwise axis along an upper surface of the generally planar dielectric member to secure the leading end and the trailing end of shunt means to the dielectric member. The shunt means has latches adjacent the leading end and the trailing end of the shunt means, and each latch engages a complementary securing member comprising an aperture or a shoulder on the dielectric insert member. The trailing end latch of the shunt means has a generally flat base with laterally extending edges which can be inserted beneath channels formed on projections extending upwardly from the planar surface of the dielectric insert member. A deflectable tab located on the trailing end latch engages a recessed shoulder in the latch at the same time the lateral edges of the latch base are positioned in channels. Thus, the trailing end of the shunt means can be fixedly secured or attached to the dielectric insert member without requiring any staking operations.

US-A-4 224 486 and FR-A-2 082 370 disclose electrical connectors each comprising a pair of mating members and shunt means for shunting terminals of one mating member when the mating members are in an unmated condition and for disengagement with the terminals upon mating of the mating members.

Embodiments of the present invention will now be described with reference to the accompanying drawings in which:
FIGURE 1 is an exploded perspective view showing a receptacle header with two mating plug connector members.
FIGURE 2 is a perspective view of a plug member, such as that shown in Figure 1, showing a locking and shunting member exploded from the mating face of the plug.

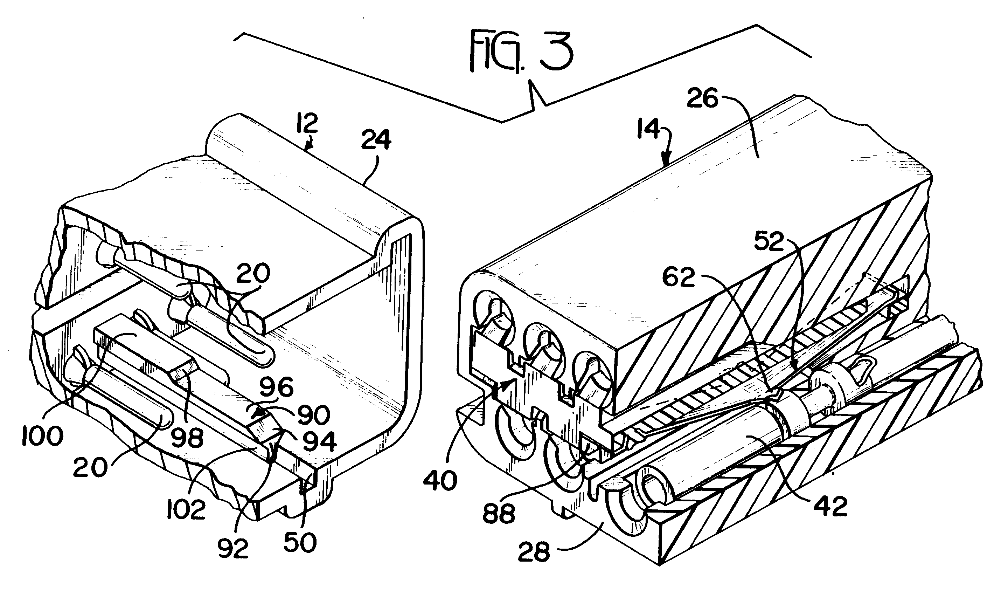

FIGURE 3 is an enlarged sectional view showing the mating faces of a receptacle and a plug connector in which the locking and shunting assembly has been positioned.
FIGURES 4a,4b and 4c are sectional views taken generally along line 4--4 of Figure 1 illustrating insertion of a plug into the receptacle.
FIGURES 5a and 5b are sectional views showing the engagement and disengagement of a shunt.
FIGURE 6 is a perspective view of one embodiment of a shunt member used in the connector assembly.
FIGURES 7a and 7b are longitudinal section views illustrating the method of securing the shunt of the first embodiment to an inverted insulative locking member.
FIGURE 8 is a view of a stamped and formed shunt member of a second embodiment shown on a carrier strip.
FIGURES 9a, 9b, and 9c show the manner in which the terminal shown in Figure 7 is inserted into engagement with the locking member.
FIGURE 10 shows a third embodiment of the locking and shunting assembly.

Connector assembly 10 includes a receptacle 12 and a pair of similar plugs 14 engageable with the receptacle to establish electrical connections between terminals carried in the plugs and associated terminals carried in the receptacle. Bridging contacts or shunts in each plug form electrical commoning connections between selected pairs of adjacent plug terminals when the plug is unmated or partially mated with of the receptacle.

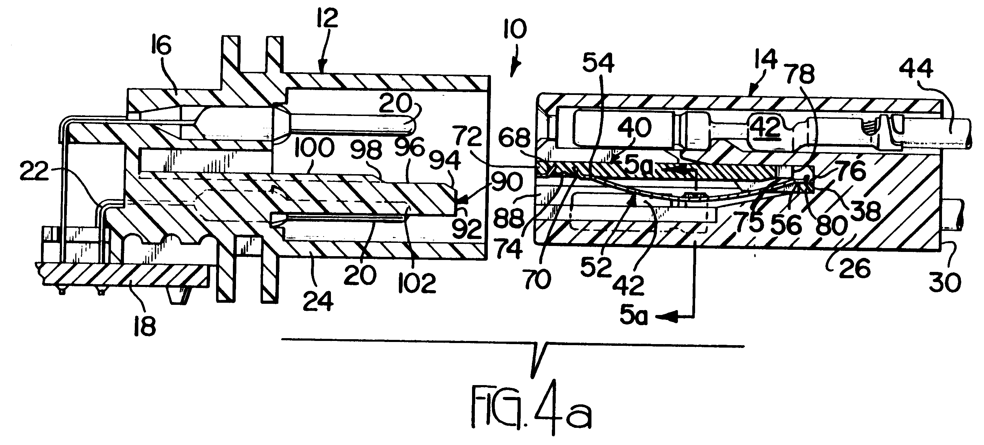

Receptacle 12 includes a molded plastic housing 16 adapted to be mounted on a circuit board 18 as shown in Figure 4a. Housing 16 carries a plurality of side-by-side pin terminals 20 projecting outwardly of the housing and having right angle terminal tails 22 extending rearwardly through the housing and downwardly to the circuit board 18. Pin terminals 20 are arranged in two spaced groups each including an upper and lower row of side-by-side terminals with the terminals in the upper row staggered between the terminals of the lower row. The housing includes a shroud 24 surrounding each group of terminals 20.

Plug 14 includes a molded plastic housing 26 having a front face 28, a rear face 30 and a plurality of cavities 32 extending between the faces 28 and 30. The cavities 32 are arranged in two rows in the pattern of pin terminals 20 for receiving the terminals of one group upon insertion of the plug into the appropriate shroud 24. A terminal latching arm 34 integral with housing 26 comprises an inner wall portion of each cavity 32. A slot-like aperture 36 extends across the width of the housing between the rows of cavities 32 and their respective terminal latching arms 34 from front face 28 rearwardly to bottom 38. A generally planar insulative locking member 40 is normally fitted within aperture 36 and forms part of the housing.

Female terminals 42 are crimped onto the ends of insulated wires 44 and then moved through openings in rear face 30 of body 26 and into cavities 32. This is done prior to fitting locking member 40 into aperture 36. The terminals flex latching arms 34 into aperture 36 out of the terminal insertion path as terminals 42 are moved to the forward ends of respective cavities 32 adjacent front face 28. Following positioning of the terminals, latching arms 34 snap back as shown in Figure 4c to confine terminals 42 within the plug housing and secure them against axially rearward movement. Wires 44 extend away from the plug for attachment to suitable circuit members. Each plug housing 26 includes a securing means such as an integral exterior housing fastener 46 engageable with a lug (not illustrated) formed on the interior surface of the appropriate shroud 24 for latching plug 14 to receptacle 12 upon mating.

The plugs may be provided with exterior polarizing ribs 48 which extend into complementary grooves 50 formed in the lower surfaces of the shrouds upon assembly. The spacing of the ribs and grooves can be different for each pair of plugs and shrouds to comprise a keying system to assure each plug fits into its appropriate shroud only.

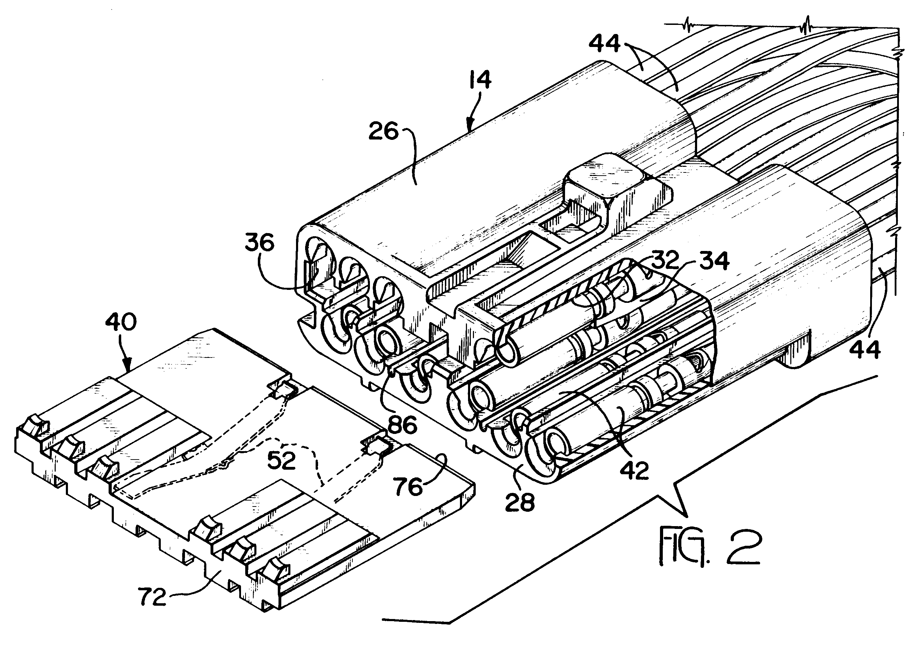

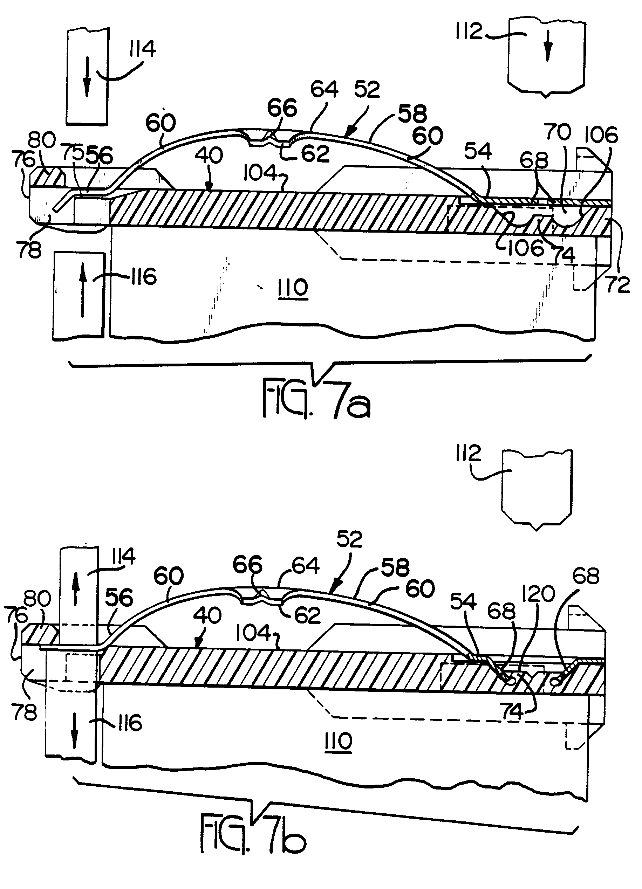

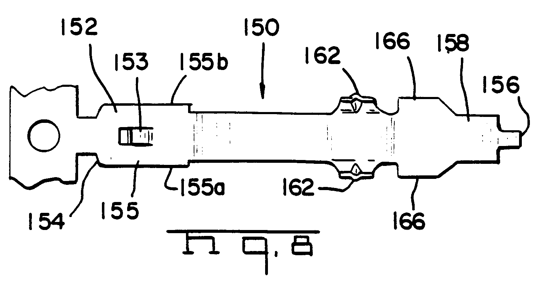

Insulative locking member 40 comprises a secondary locking member for retaining the terminal 42 in the plug housing. Locking member 40 carries a pair of shunts 52 shown in Figure 6. Shunts 52 are formed from a length of flat sheet metal stock and include a fixed end 54, a free end 56 and a downwardly bowed spring 58 having legs 60 joining the ends. Wings 62 extend outwardly from the sides of central crest 64 of spring 58 and preferably include V-shaped embossments 66 on shunts 52 extending outwardly away from the contact surface. The wings and crest form a bridging element. Shunts 52 are mounted on the lower surface of locking member 40 as shown in Figures 2 and 4a and extend therealong in a direction parallel to the axis of the terminals 42 in housing 26, and fixed end 54 of each shunt 52 may be secured to locking member 40 as shown in Figures 7a and 7b.

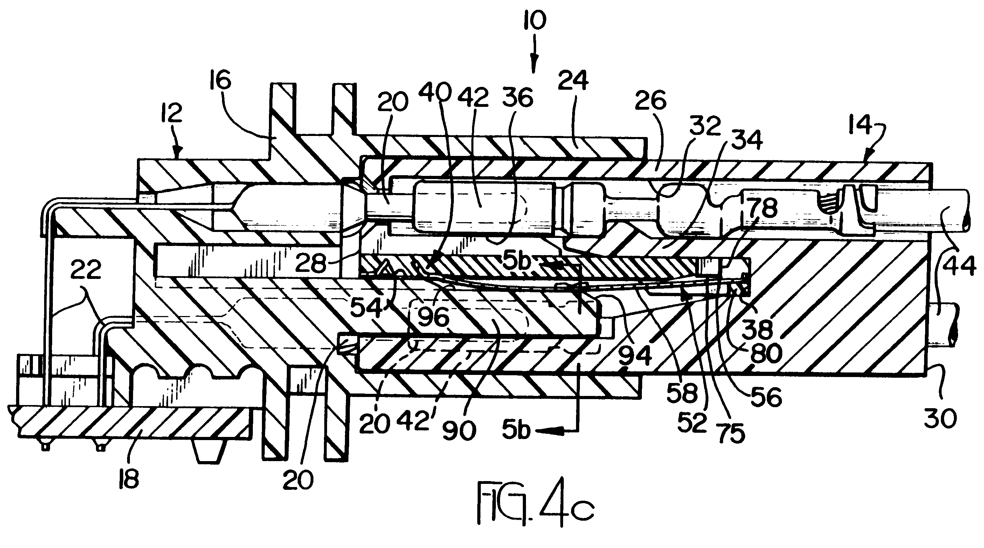

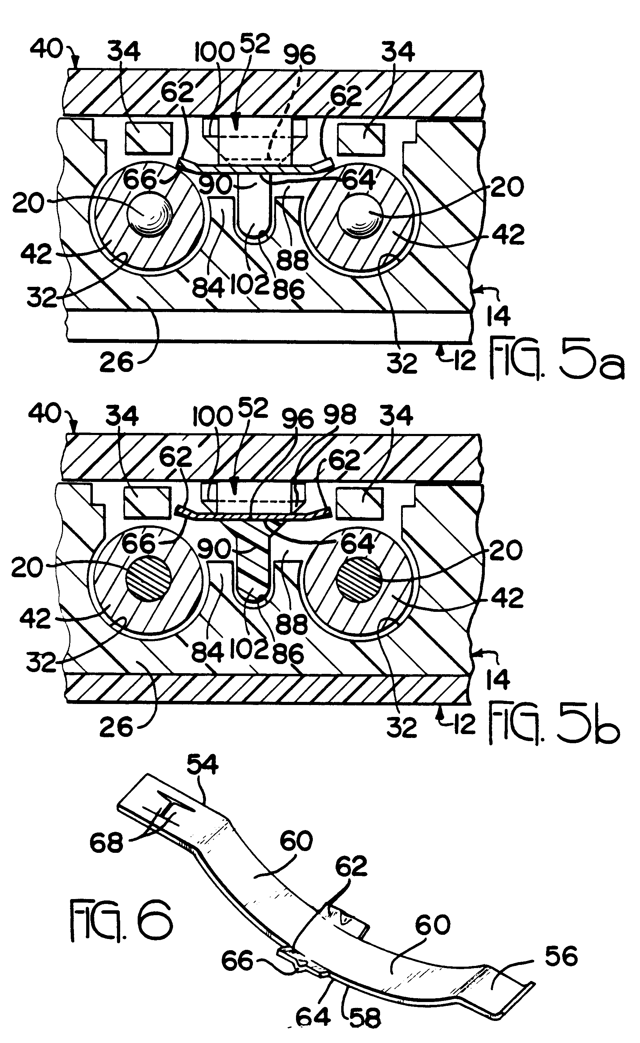

As shown in Figure 5a the cavities 32 adjacent spring 58 extend only partially around the terminals 42 to provide openings 82 located between latch arms 34 and a longitudinal ridge 84 separating the cavities. Ridge 84 extends rearwardly from front face 28 along terminals 42. A cam support groove 86 having a rounded bottom extends along the top of the ridge 84, with a cam post-receiving opening 88 defined between ridge 84 and locking member 40 between the pair of adjacent terminals 42.

Figure 2 illustrates a partially assembled plug 14 with terminals 42 seated within cavities 32 and held in place by latching arms 34. Assembly of the plug is completed by moving lead end 76 of locking member 40 with attached shunts 52 into aperture 36 as shown in Figure 4a. The locking member locks the latching arms 34 in position to prevent withdrawal of terminals 42. During insertion, the crest 64 and wings 62 of the bridge contacts 52 ride over the tops of the pairs of adjacent terminals 42 in the lower row of terminals so that when insulative locking member 40 is fully inserted the spring 58 is partially flexed from the free position and wings 62 engage the terminals 42 as shown in Figure 5a. In this position, the shunts 52 form electrical commoning connections between the adjacent terminals 42.

The receptacle 12 includes four cantilever cam posts 90 each engageable with one of the springs 58 upon insertion of plugs 14 into the receptacle. Cam posts 90 extend forwardly of receptacle housing 16 parallel to pin terminals 20. Each post is located between two pin terminals 20 in the lower row of terminals which form electrical connections with the two female terminals 42 in the plug to either side of a ridge 84. As shown in Figure 4a, the posts 90 are longer than the terminals 20.

Each post 90 includes a forward end 92, a first ramp surface 94 angling up at a shallow angle at the top of the end to a flat dwell surface 96 extending from the end of the first ramp surface 94 a distance toward the housing 16. A second ramp surface 98 angles upwardly from the inner end of the dwell surface to a flat top surface 100 which extends rearwardly to body 16. The upper surfaces of the cam post have a width equal approximately to the width of the contact 52. A narrow rounded rib 102 extends along the bottom of the cam post from housing 16 to forward end 92. Rib 102 has a sliding fit within groove 86.

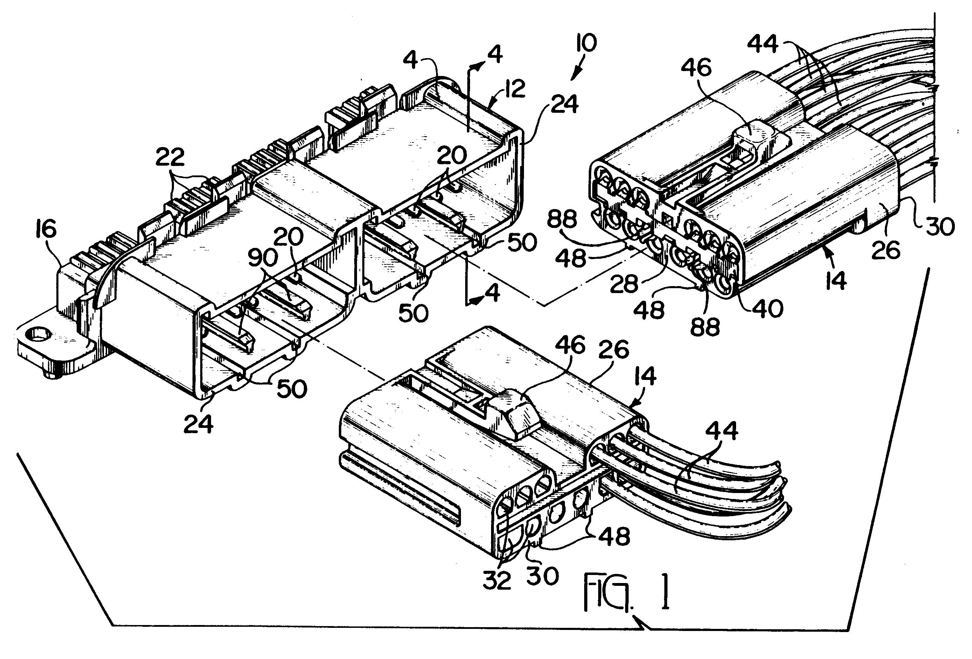

When plugs 14 are withdrawn from receptacle 12 as shown in Figure 1 the shunt springs 58 hold wings 62 against the adjacent female terminals 42 thereby forming respective electrical commoning connections between the terminals and thus between their associated wires.

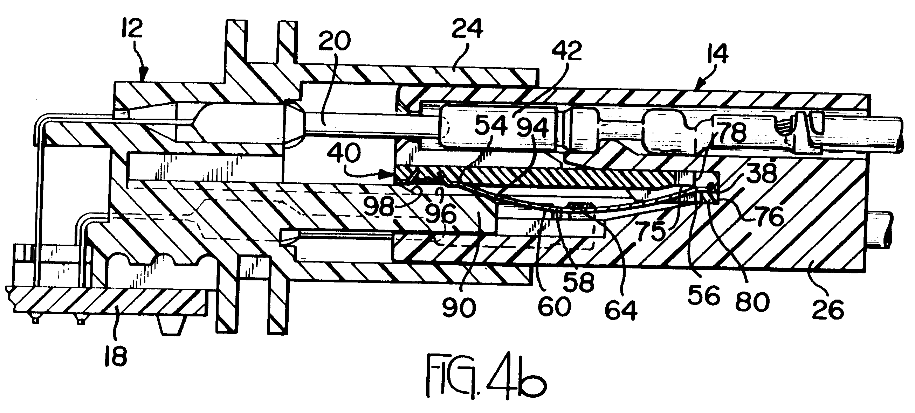

Each plug is mated with the receptacle by first positioning the plug in proper alignment in front of the receptacle shroud 24 as shown in Figure 4a with polarizing ribs 48 aligned with the respective polarizing grooves 50. The plug is then moved into the shroud so that forward ends 92 of cam posts 90 extend freely into cam post-receiving openings 88 above the ridges 84 with the rounded ribs 102 fitted in grooves 86. Movement of the plug toward the receptacle brings the lead ends of the female terminals 42 into contact with the tips of pin terminals 20 to form initial electrical connections between the terminals, and moves the second ramp surfaces 98 on cam posts 90 against legs 60 of springs 58 extending between the crest 64 and the fixed end 54, as in Figure 4b.

Further movement of the plug into the receptacle fully seats the pin terminals 20 into the socket terminals 42. At the same time, second ramp surface 98 of each cam post 90 lifts and collapses a respective spring 58 so that wings 62 are moved up away from the adjacent female terminals 42 to break the electrical commoning connection between the terminals, as in Figure 5b. During this step, the cantilever cam posts 90 are supported against deflection by ridges 84. When the plug is fully inserted as shown in Figure 4c, the spring crests 64 rest on flat dwell surfaces 96 of the supported cam posts 90. Collapse of each of the springs 58 moves free end 56 thereof a short distance along a respective recess 78 beneath bridge 80 toward bottom 38 of aperture 36. Dwell surface 96 is spaced a sufficient distance below locking member 40 to provide room for crest 64 and upwardly angled wing 62 of a spring 58 as shown in Figures 4c and 5b. Top surface 100 has a close sliding fit with the lower surface of locking member 40 and the fixed end 54 of shunt 52 to fill the space between the formerly bridged female terminals 42 with dielectric material.

After the plug has been fully inserted into the receptacle as shown in Figure 4c the shunt has been removed from the connector circuitry and each of the previously bridged female terminals 42 to either side of ridge 84 forms part of an independent circuit path.

In some applications it may be desirable to dedicate one of each pair of female terminals 42 and its associated wire to a circuit for indicating whether the plug 14 is or is not fully mated with the receptacle 12. For instance, the wire connected to one of the pairs of terminals 42 shown in Figures 5a and 5b may be connected to a remote visual indicator (not shown) actuated when the shunt forms an electrical commoning connection between the female terminals. Such an application is particularly useful when the connector assembly 10 is part of a safety system and there is a need to indicate when the plug is or begins to become disconnected from the receptacle and, as a result, the safety system would be inoperative.

The connector assembly 10 may also be used in applications where a number of plugs 14 are connected in series to form part of a databus and are selectively connected to components through receptacles 12. In this application the databus remains operable through the shunts when one or more plugs is disengaged from a receptacle.

Referring to Figures 6, 7a and 7b a first embodiment of shunt 52 is secured to an insulative locking member 40 along a surface 104. With locking member lying inverted on support 110 in Figure 7a, a pair of lock tabs 68 formed on shunt end 54 are bent out from end 54 and driven into a recess 70 at the trailing end 72 of locking member 40, tabs 68 being disposed along sloped sides 106 of the recess. An integral plastic boss 74 in the center of recess 70 is then deformed over free ends of tabs 68 to hold fixed end 54 in place by a recessed joint 120 thus formed. Each spring free end 56 is partially flattened by punches 114, 116. During connector mating free end 56 engages a bearing surface 75 proximate the lead end 76 of the locking member and is confined in a relief recess 78 under bridge 80.

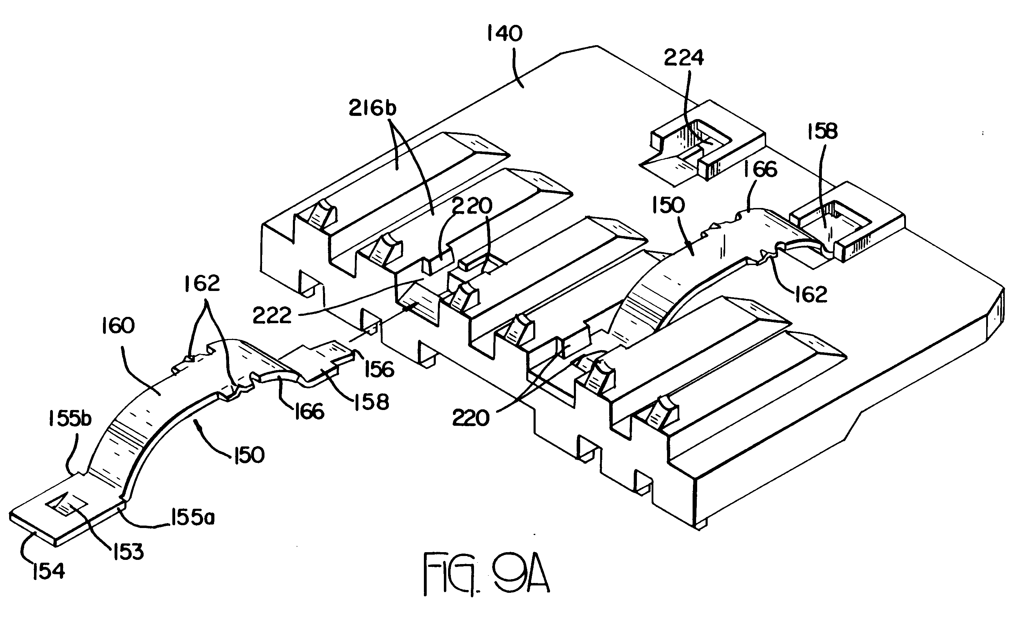

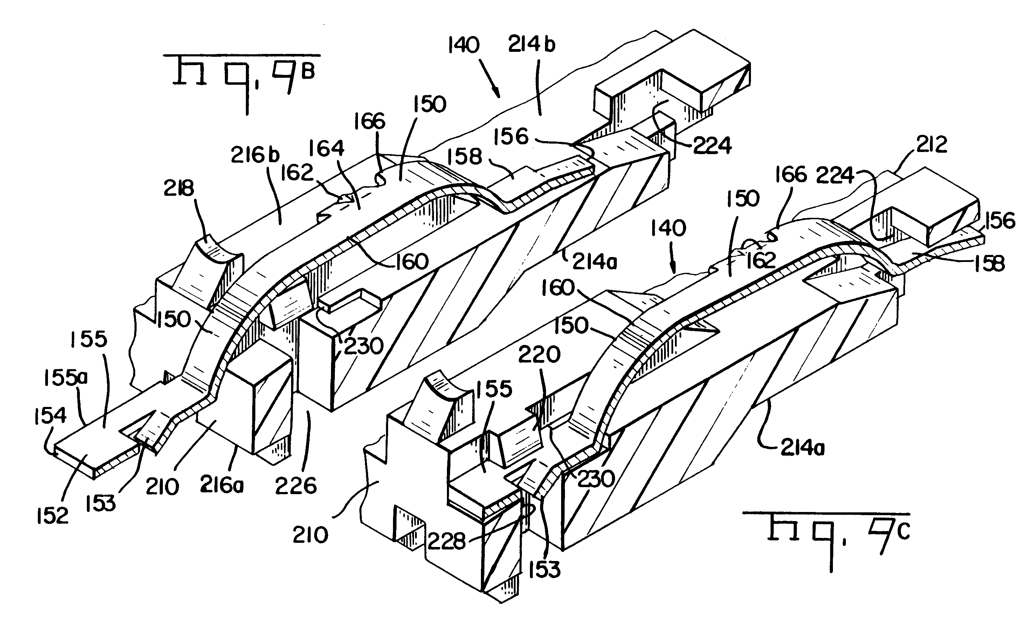

A second embodiment of the invention is shown in Figures 8 and 9a to 9c. Each shunt 150 has a fixed latch 152 and movable latch 158 adjacent opposite ends of the shunt 150. Latch 158 is adjacent the leading end 156 of the shunt and can also be referred to as the leading end latch 158. Latch 152 is adjacent the trailing end 154 of the shunt 150 and can also be referred to as the trailing end latch 152. A resiliently deflectable bowed mid-section 160 protrudes above the plane of latches 152 and 158 and extends between the leading end 156 and the trailing end 154. A pair of bridging member wings 162 extend from opposite edges of the shunt 150 and are located at the crest 164 of the bowed mid-section 160. A pair of anti-stubbing wings 166 also extend from the edges of the shunt 150 and are located between the bridging member wings 162 at the crest of the mid-section 166 and the leading end 156. The leading end or movable latch 158 comprises a finger narrower than the adjacent portion of the shunt which comprises the forwardmost projection of the shunt 150. The trailing end or fixed latch 156 has a generally flat or planar base 155 having opposite edges 155a and 155b which extend laterally beyond the portion of the bowed mid-section 160 adjoining the base 155. In other words, the base 155 is wider than the bowed mid-section 160. A resilient, deflectable tab 153 extends below the surface of the base 155 while the bowed mid-section 160 protrudes upwardly from the plane of the base 155.

Shunt 150 is mounted on a generally planar insulative locking member 140. Locking member 140 has a trailing edge 210 and a leading edge 212 and opposite ends of two opposite or generally planar surfaces or faces 214a and 214b. A series of locking ribs or projections 216a and 216b project outwardly from upper face 214a and lower face 214b respectively. The projections 216a and 216b engage the terminal latching arms when the locking member 140 is received within the housing slot and serve to retain the terminals in a stable position within the housing. Raised locking surfaces 218 on each rib 216a and 216b engage the mating end of each terminal to prevent rearward movement of the terminals from the housing. The ribs 216b are spaced by at least a distance equal to the width of the bowed mid-section 160 of shunt 150 adjacent the latch 152, thus allowing the shunt leading end 156 to pass between the adjacent ribs 216b when the shunt 150 is moved in a direction parallel to the shunt lengthwise axis from the trailing edge 210 toward the leading edge 212 of the locking member 140. Two adjacent projecting ribs 216b having opposed ledges 220 define channels 222 at the bottom of the ribs 216b. The channels have a clearance height at least equal to the thickness of the metal stock from which shunt 150 is stamped. The trailing end latch 152 of shunt 150 can be positioned between two adjacent ribs 216b having ledges 220 with the lateral edges 155a and 155b located in the open ended channels 222 below ledges 220. Locking member 140 also has at least one leading edge aperture 224 and at least one trailing edge aperture 226, each below the position of shunt leading end latch 158 and shunt trailing end latch 152 respectively. A recessed shoulder 228 defines one side of the trailing edge aperture 226 and the resilient tab 153 is oriented to engage the recessed shoulder 228 to prevent withdrawal of the shunt 150 after complete insertion of locking member 140.

One or more shunts 150 are assembled to the planar insulative locking member 140 by simply sliding an individual shunt 150 along a lengthwise shunt axis along the planar face 214b from the trailing edge 210 toward the leading edge 212 of locking member 140. No additional assembly steps are required. The leading end 156 of shunt 150 is narrower than adjacent projecting ribs 216b having opposed ledges 220 so as to freely pass through this gap. Continued sliding movement of the shunt eventually brings leading end latch 158 having a downwardly projecting finger or tongue into engagement with the leading edge aperture 224. Latch 158 engages the bridge over leading end aperture 224 so as to prevent upward movement of the leading end 156 away from the locking member 140. Note that leading end 156 continues to be axially movable and preferably the free end retains partial lateral or side to side mobility so that the shunt 150 can partially float to ensure that shunting contact is established between two adjacent terminals 142 even in the event of partial misalignment. The trailing end 154 of shunt 150, having base 155 with relatively wide laterally extending edges 155a and 155b moves between adjacent projections 216b having ledges 220 when the leading end 156 is moved into engagement with leading edge aperture 224. The edges 155a and 155b are inserted into channel 222 below ledges 220 to prevent upward movement of the trailing end 154 of the shunt 150. Base 155 is disposed in a shallow recess and engages stop surface 230 facing trailing edge 210 to prevent further forward movement. The tab 153 in base 155 is upwardly deflected during insertion of the shunt and springs back to its normal position when tab 153 is disposed over trailing edge aperture 226. Tab 153 engages recessed shoulder 228 to prevent rearward movement of the shunt 150. Trailing end 154 is now fixed while the leading end 156 retains some mobility. Latches 152 and 158 are thus properly engaged by complementary latch securing members at the leading and trailing edges of the insulative locking member 140. Since the shunt 150 is resilient and rearward movement of the leading end 156 is possible, flexing the bowed mid-section is possible. Rearward movement thus disengages leading end 156. Since channel 222 is open on both ends and tab 153 is deflectable, the base 155 can be pulled forwardly out of channel 222 to disengage the shunt 150 for removal or replacement.

After the shunts 150 have been assembled to locking member 140, the locking and shunting assembly can be inserted into the slot 136 in position to positively lock the terminals in place and to shunt or bridge selected adjacent terminals 142. The anti-stubbing wings 166 on each shunt 150 engage the terminals 142 during insertion of the locking member 140 to partially deflect the shunt 150, thus preventing any undesirable tendency of the bridging member wings 162 at crest 164 of the bowed mid-section 160 from stubbing against the terminals 142. Upon complete insertion, the locking member 140 locks terminal locking arms 134 in position to prevent withdrawal of terminals 142. Bridging member wings 162 engage adjacent terminals to establish an electrical shunt. Since the leading end 156 of each shunt can float laterally, the shunts 150 will still engage two adjacent terminals 142 even though the terminals 142, the shunts 150 or the locking member 140 might be slightly misaligned.

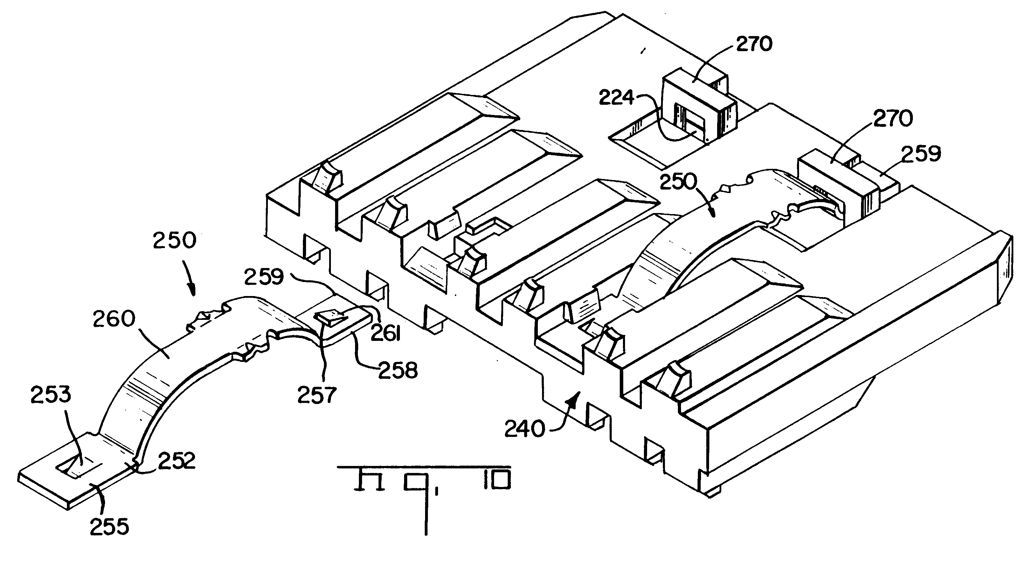

A third embodiment of shunt 250 shown in Figure 10 has a leading end or movable latch 258 which differs from the latch 158. Latch 258 has a central opening 257 stamped in a flat section 259 extending from the forward end of the bowed mid-section 260. An upwardly formed tab 261 is defined within the opening 257 and extends upwardly in the opposite direction from the downwardly extending tab 253 located in the base 255 in the fixed or trailing end latch 252. Shunt 250 is otherwise identical to shunt 150. Locking member 240 is adapted to receive and hold shunt 250 and, except for the leading edge securing member, is otherwise identical to locking member 140. A U-shaped strap 270 extends above aperture 272 and is adapted to engage an upwardly angled tab 261 and more securely retain the leading end 256, which must now be bent beyond repair to permit removal of the terminals.

## Claims

1. A shunting insert assembly in combination with an electrical connector (10) comprising a receptacle (12) and a plug (14), said insert assembly comprising:
a dielectric insert member (40,140,240) adapted to be received into and secured within an insert-receiving aperture (36) of said plug (14) along a pair of electrical terminals therein (42); and
a shunt means (52,150,250) secured along a surface (104,214b) of said dielectric insert member (40,140,240) for location proximate to said pair of terminals (42) when said insert member (40,140,240) is received in said aperture (36), said shunt means (52,150,250) including a fixed end (54,152,252) joined to said dielectric member (40,140,240) and an opposed end (56,158,258) not fixed to said dielectric member (40,140,240), and said shunt means (52,150,250) including a deflectable section (58,160,260) between said fixed end (54,152,252) and said opposed end (56,158,258) extending outwardly from said dielectric member (40,140,240), said deflectable section (58,160,260) including a bridging member (62,64; 162,164) adapted to be spring biased against contact portions of said pair of terminals (42) when said insert member (40,140,240) is received in said aperture (36), to establish an electrical commoning connection therebetween.

2. A shunting assembly as set forth in claim 1, wherein said opposed end (56,158,258) of said shunt means (52,150,250) includes a latch section (56,158,258) extending longitudinally from said deflectable section (58,160,260) along said surface (104,214b) of said dielectric insert member (40,140,240) and disposed in a corresponding channel (78) in said dielectric member, the end of said latch section (56,158,258) being disposed under a bridge (80,270) over said corresponding channel (78) integral with said dielectric member (40,140,240), whereby said latch section (56,158,258) is secured against movement outwardly from said surface (104,214b) of said dielectric member (40,140,240) and is permitted movement along said surface within said corresponding channel (78) during deflection of said deflectable section (58,160,260) of said shunt means (52,150,250).

3. A shunting assembly as set forth in claim 1, wherein said fixed end (152,252) of said shunt means (150,250) includes a base (155,255) extending longitudinally from said deflectable section (160,260);
said base (155,255) has side edges extending within a shunt-receiving channel (222) below respective opposed ledges (220) extending inwardly from walls of channel-defining projections (216b) near a trailing edge (210) of said dielectric member (140,240) preventing movement of said base (155,255) outwardly from said surface (214b) of said dielectric member (140,240);
said base (155,255) has a resilient tab (153,253) extending into a corresponding tab-receiving recess (228) in said surface of said dielectric member (140,240) and towards a stop surface defined by said tab-receiving recess (228) facing inwardly from said trailing edge (210), to stoppingly engage said stop surface to prevent movement of said shunt means (150,250) outwardly toward said trailing edge (210); and
said base (155,255) is disposed in a shallow recess into said surface (214b) of said dielectric member (140,240) having first stop surfaces (230) at an inward recess end, and said base (155,255) being wider than said deflectable section (160,260) and defining second stop surfaces facing said first stop surfaces (230) to be stoppingly engaged thereby to prevent further movement of said base (155,255) away from said trailing edge (210) of said dielectric member (140,240),
whereby said base (155,255) is held against movement in all directions thus being secured so as to prevent disengagement of said shunt means (150,250) from said dielectric member (140,240).

4. A shunting assembly as set forth in claim 1,
wherein said terminals (42) of said electrical connector plug (14) are retained in said plug (14) by latch arms (34) of a housing means (26) of said plug (14), said latch arms (34) being disposed along said insert-receiving aperture (36), wherein said dielectric member (40,140,240) is disposed along said latch arms (34) in a manner preventing unlatching after connector assembly, thereby assuring the retention of said terminals (42) in said plug (14).

5. A method of making the shunting insert assembly set forth in any one of claims 1 to 3, comprising the steps of:
positioning the shunt means (52) atop the surface (104) of the dielectric member (40) at a shunt-securing location with a pair of facing lock tabs (68) of fixed end (54) positioned over a recess (70) having sloped sides (106) and a central boss (74) upstanding therein;
bending the lock tabs (68) into the recess (70) against sloping sides (106) thereof so that free ends of the lock tabs (68) are adjacent the central boss (74);
bulk deforming the central boss (74) over the lock tab free ends, forming a joint (120) recessed below the surface (104) of the dielectric member (40) between the shunt means (52) and the dielectric member (40).

6. A method of making the shunting assembly as set forth in claim 3, comprising the steps of:
positioning the shunt means (150,250) adjacent said trailing edge (210) of the dielectric member (140,240) at a shunt-securing location with the lengthwise axis of the shunt means (150,250) having an orientation transverse to said trailing edge (210) and coplanar with the surface (214b) of the dielectric member (140,240) to which the shunt means (150,250) is to be secured; and
sliding the shunt means (150,250) in a direction parallel to the shunt axis across the surface (214b) of the dielectric member (140,240) until the latch section (158,258) of the shunt means (150,250) enters the corresponding channel near the leading edge (212) and is disposed under the bridge (80,270), and the base section (152,252) is disposed between the channel-defining projections (216b) and the side edges (155a,155b,255) thereof are beneath the opposed projections (220), and the resilient tab (153,253) rides over the portion of the dielectric member (140,240) between the trailing edge (210) and the stop surface (228) and latches behind the stop surface,
whereby the shunt means (150,250) is securable to the dielectric member (140,240) solely by sliding movement of the shunt means (150,250) along the surface (214b) of the dielectric member (140,240).

## Patentansprüche

1. Shunt-Einsatzanordnung in Kombination mit einem elektrischen Verbinder (10) mit einer Buchse (12) und einem Stecker (14), wobei die Einsatzanordnung verfügt über ein dielektrisches Einsatzteil (40, 140, 240), das zur Aufnahme in eine Einsatz-Aufnahmeöffnung (36) des Stecker (14) entlang eines Paars elektrischer Anschlüsse (42) und zur Befestigung innerhalb der Öffnung geeignet ist, und über ein Shuntmittel (52, 150, 250), das entlang einer Fläche (104, 214b) des dielektrisches Einsatzteils (40, 140, 240) zur Anordnung nahe dem Paar der Anschlüsse (42) befestigt ist, wenn das Einsatzteil (40, 140, 240) in der Öffnung (36) aufgenommen ist, wobei das Shuntmittel (52, 150, 250) ein befestigtes Ende (54, 152, 252), das mit dem dielektrischen Teil (40, 140, 240) verbunden ist, und ein gegenüberliegendes Ende (56, 158, 258) aufweist, das mit dem dielektrischen Teil (40, 140, 240) nicht fest verbunden ist, und wobei das Shuntmittel (52, 150, 250) einen biegbaren Abschnitt (58, 160, 260) zwischen dem befestigten Ende (54, 152, 252) und dem gegenüberliegenden Ende (56, 158, 258) aufweist, das sich von dem dielektrischen Teil (40, 140, 240) aus nach außen erstreckt, wobei der biegbare Abschnitt (58, 160, 260) ein Brückenteil (62, 64; 162, 164) aufweist, das geeignet ist, gegen die Kontaktbereiche des Paars der Anschlüsse (42) federbelastet zu sein, wenn das Einsatzteil (40, 140, 240) in der Öffnung (36) aufgenommen ist, um eine elektrische Leitungsverbindung dazwischen auszubilden.

2. Shunt-Anordnung nach Anspruch 1, wobei das gegenüberliegende Ende (56, 158, 258) des Shunt-Mittels (52, 150, 250) einen Rastabschnitt (56, 158, 258) aufweist, der sich in Längsrichtung von dem abbiegbaren Abschnitt (58, 160, 260) längs der Oberfläche (104, 214b) des dielektrischen Einsatzteils (40, 140, 240) erstreckt und in einem entsprechenden Kanal (78) in dem dielektrischen Teil angeordnet ist, wobei das Ende des Rastabschnitts (56, 158, 258) unter einer Brücke (80, 270) über dem entsprechenden Kanal (78) einstückig mit dem dielektrischen Teil (40, 140, 240) angeordnet ist, wodurch der Rastabschnitt (56, 158, 258) gegen eine Bewegung auswärts von der Oberfläche (104, 214b) des dielektrischen Teils (40, 140, 240) gesichert ist und eine Bewegung desselben längs der Oberfläche innerhalb des entsprechenden Kanals (78) während des Abbiegens des biegbaren Abschnitts (58, 160, 260) des Shuntmittels (52, 150, 250) gestattet ist.

3. Shunt-Anordnung nach Anspruch 1, wobei das befestigte Ende (152, 252) des Shunt-Mittels (150, 250) eine Basis (155, 255) aufweist, die sich in Längsrichtung von dem biegbaren Abschnitt (160, 260) aus erstreckt;
die Basis (155, 255) Seitenränder aufweist, die sich innerhalb des Shunt-Aufnahmekanals (222) unter jeweiligen gegenüberliegenden Simsen (220) erstreckt, die sich einwärts von den Wänden von einen Kanal begrenzenden Vorsprüngen (216b) in der Nähe eines hinteren Randes (210) des dielektrischen Teils (140, 240) erstrecken, was eine Bewegung des Basisteils (155, 255) auswärts von der Oberfläche (214b) des dielektrischen Teils (140, 240) weg verhindert;
die Basis (155, 255) einen nachgiebigen Ansatz (153, 253) aufweist, der sich in eine entsprechende Ansatz-Aufnahmeausnehmung (228) in der Oberfläche des dielektrischen Teils (140, 240) und in Richtung auf eine Anschlagoberfläche erstreckt, die durch die Ansatz-Aufhahmeausnehmung (228) begrenzt ist, die sich von dem hinteren Rand (210) aus einwärts gewandt erstreckt, um die Anschlagfläche anschlagend zu berühren, um eine Bewegung des Shuntmittels (150, 250) auswärts in Richtung auf den hinteren Rand (210) zu verhindern; und
die Basis (155, 255) in einer flachen Ausnehmung in der Oberfläche (214b) des dielektrischen Teils (140, 240) mit ersten Anschlagflächen (230) an einem einwärts gelegenen Ausnehmungsende angeordnet ist und die Basis (155, 255) breiter als der biegbare Abschnitt (160, 260) ist und zweite Anschlagflächen, die den ersten Anschlagflächen (230) zugewandt sind, begrenzt, um dadurch anschlagend erfaßt zu werden, um eine weitere Bewegung der Basis (155, 255) von dem hinteren Rand (210) des dielektrischen Teils (140, 240) weg zu verhindern,
wodurch die Basis (155, 255) gegen eine Bewegung in allen Richtungen gehalten ist, wobei sie so festgelegt ist, daß ein Außereingriffkommen des Shunt-Mittels (150, 250) von dem dielektrischen Teil (140, 240) verhindert ist.

4. Shunt-Anordnung nach Anspruch 1, wobei die Anschlüsse (42) des elektrischen Verbindersteckers (14) in dem Stecker (14) durch Rastarme (34) eines Gehäusemittels (26) des Steckers (14) festgehalten sind, wobei die Rastarme (34) längs der Einsatz-Aufnahmeöffnung (36) angeordnet sind, wobei das dielektrische Teil (40, 140, 240) längs der Rastarme (34) in einer Weise angeordnet ist, die das Entrasten nach dem Zusammenbau des Verbinders verhindert, wodurch das Festhalten der Anschlüsse (42) in dem Stecker (14) sichergestellt ist.

5. Verfahren zur Herstellung der Shunt-Einsatzanordnung nach irgendeinem der Ansprüche 1-3, bestehend aus den Schritten:
Anordnen des Shunt-Mittels (52) auf der Oberfläche (104) des dielektrisches Teils (40) an einer Shunt-Befestigungsstelle mit einem Paar einander zugewandter Verriegelungsansätze (68) des befestigten Endes (54), die über eine Ausnehmung (70) mit abgeschrägten Seiten (106) und einem dort hochstehenden zentralen Vorsprung (74) angeordnet sind;
Abbiegen der Verriegelungsansätze (68) in die Ausnehmung (70) gegen die abgeschrägten Seiten (106) derselben, so daß freie Enden der Verriegelungsansätze (68) dem zentralen Vorsprung (74) benachbart sind;
Bulk-Deformieren des zentralen Vorsprungs (74) über den freien Enden des Verriegelungsansatzes, wodurch eine Verbindung (120) gebildet wird, die unter der Oberfläche (104) des dielektrischen Teils (40) zwischen dem Shuntmittel (52) und dem dielektrischen Teil (40) ausgespart ist.

6. Verfahren zur Herstellung der Shunt-Anordnung nach Anspruch 3, mit den Schritten:
Anordnen des Shunt-Mittels (150, 250) in der Nähe des hinteren Randes (210) des dielektrischen Teils (140, 240) an einer Shunt-Befestigungsstelle, wobei die Längsachse des Shunt-Mittels (150, 250) eine Ausrichtung quer zu dem hinteren Rand (210) und koplanar zu der Oberfläche (214b) des dielektrischen Teils (140, 240) aufweist, an dem das Shuntmittel (150, 250) zu befestigen ist; und
Verschieben des Shunt-Mittels (150, 250) in einer Richtung parallel zu der Shunt-Achse über die Oberfläche (214b) des dielektrischen Teils (140, 240), bis der Rastabschnitt (158, 258) des Shunt-Mittels (150, 250) in den entsprechenden Kanal nahe bei dem vorderen Rand (212) eintritt und unter der Brücke (80, 270) angeordnet ist und der Basisabschnitt (152, 252) zwischen den einen Kanal begrenzenden Vorsprüngen (216b) angeordnet ist und die Seitenränder (155a, 155b, 255) desselben unterhalb der einander gegenüberliegenden Vorsprünge (220) liegen und sich der nachgiebige Ansatz (153, 253) über dem Bereich des dielektrischen Teils (140, 240) zwischen dem hinteren Rand (210) und der Anschlagfläche (228) bewegt und hinter der Anschlagfläche einrastet,
wodurch das Shuntmittel (150, 250) an dem dielektrischen Teil (140, 240) ausschließlich durch eine Gleitbewegung des Shunt-Mittels (150, 250) längs der Oberfläche (214b) des dielektrischen Teils (140, 240) befestigbar ist.

## Revendications

1. Ensemble rapporté de shuntage en combinaison avec un connecteur électrique (10) comportant une douille (12) et une fiche (14), ledit ensemble rapporté comportant :
un élément rapporté diélectrique (40, 140, 240) destiné à être reçu et fixé dans une ouverture (36) de réception d'élément rapporté de ladite fiche (14) le long d'une paire de bornes électriques (42) situées dans cette ouverture ; et
des moyens de shuntage (52, 150, 250) fixés le long d'une surface (104, 214b) dudit élément rapporté diélectrique (40, 140, 240) pour être placés à proximité de ladite paire de bornes (42) lorsque ledit élément rapporté (40, 140, 240) est reçu dans ladite ouverture (36), lesdits moyens de shuntage (52, 150, 250) comprenant une extrémité fixe (54, 152, 252) reliée audit élément diélectrique (40, 140, 240) et une extrémité opposée (56, 158, 258) qui n'est pas fixée audit élément diélectrique (40, 140, 240), et lesdits moyens de shuntage (52, 150, 250) comprenant une partie flexible (58, 160, 260) entre ladite extrémité fixe (54, 152, 252) et ladite extrémité opposée (56, 158, 258) s'étendant vers l'extérieur dudit élément diélectrique (40, 140, 240), ladite partie flexible (58, 160, 260) comprenant un élément de pontage (62, 64 ; 162, 164) destiné à être sollicité par ressort contre des parties de contact de ladite paire de bornes (42) lorsque ledit élément rapporté (40, 140, 240) est reçu dans ladite ouverture (36), pour établir une connexion électrique de mise en commun entre elles.

2. Ensemble de shuntage selon la revendication 1, dans lequel ladite extrémité opposée (56, 158, 258) desdits moyens de shuntage (52, 150, 250) comprend une partie d'accrochage (56, 158, 258) s'étendant longitudinalement depuis ladite partie flexible (58, 160, 260) le long de ladite surface (104, 214b) dudit élément rapporté diélectrique (40, 140, 240) et disposée dans une rainure correspondante dans ledit élément diélectrique (78), l'extrémité de ladite partie d'accrochage (56, 158, 258) étant disposée sous un pontet (80, 270) au-dessus de ladite rainure correspondante (78), d'une seule pièce avec ledit élément diélectrique (40, 140, 240), grâce à quoi ladite partie d'accrochage (56, 158, 258) est fixée de façon à ne pas se déplacer vers l'extérieur depuis ladite surface (104, 214b) dudit élément diélectrique (40, 140, 240) et peut se déplacer le long de ladite surface à l'intérieur de ladite rainure correspondante (78) pendant une flexion de ladite partie flexible (58, 160, 260) desdits moyens de shuntage (52, 150, 250).

3. Ensemble de shuntage selon la revendication 1, dans lequel ladite extrémité fixe (152, 252) desdits moyens de shuntage (150, 250) comprend une base (155, 255) s'étendant longitudinalement depuis ladite partie flexible (160, 260) ;
ladite base (155, 255) comporte des bords latéraux s'étendant à l'intérieur d'une rainure (222) de réception de shunt au-dessous de rebords opposés respectifs (220) s'étendant vers l'intérieur depuis des parois de saillies (216b) définissant une rainure à proximité d'un bord arrière (210) dudit élément diélectrique (140, 240), empêchant ladite base (155, 255) de se déplacer vers l'extérieur depuis ladite surface (214b) dudit élément diélectrique (140, 240) ;
ladite base (155, 255) comporte une languette élastique (153, 253) pénétrant dans un évidement correspondant (228) de réception de languette dans ladite surface dudit élément diélectrique (140, 240) et s'étendant vers une surface d'arrêt définie par ledit évidement (228) de réception de languette, faisant face vers l'intérieur depuis ledit bord arrière (210), pour engager en s'arrêtant ladite surface d'arrêt afin d'empêcher lesdits moyens de shuntage (150, 250) de se déplacer vers l'extérieur en direction dudit bord arrière (210) ; et
ladite base (155, 255) est disposée dans un évidement peu profond dans ladite surface (214b) dudit élément diélectrique (140, 240), ayant des premières surfaces d'arrêt (230) à une extrémité de l'évidement vers l'intérieur, et ladite base (155, 255) étant plus large que ladite partie flexible (160, 260) définissant des secondes surfaces d'arrêt faisant face auxdites premières surfaces d'arrêt (230) pour être engagées, en s'arrêtant, par elles pour empêcher la poursuite du mouvement de ladite base (155, 255) à l'écart dudit bord arrière (210) dudit élément diélectrique (140, 240),
grâce à quoi ladite base (155, 255) est maintenue de façon à ne pas pouvoir se déplacer, dans toutes les directions, étant ainsi assujettie de façon à empêcher lesdits moyens de shuntage (150, 250) de se dégager dudit élément diélectrique (140, 240).

4. Ensemble de shuntage selon la revendication 1, dans lequel lesdites bornes (42) de ladite fiche (14) du connecteur électrique sont retenues dans ladite fiche (14) par des bras (34) de verrouillage d'un moyen à boîtier (26) de ladite fiche (14), lesdits bras (34) de verrouillage étant disposés le long de ladite ouverture (36) de réception d'élément rapporté, ledit élément diélectrique (40, 140, 240) étant disposé le long desdits bras de verrouillage (34) d'une manière empêchant un déverrouillage après l'assemblage du connecteur, assurant ainsi la retenue desdites bornes (42) dans ladite fiche (14).

5. Procédé de réalisation de l'ensemble rapporté de shuntage selon l'une quelconque des revendications 1 à 3, comprenant les étapes qui consistent :
à positionner les moyens de shuntage (52) sur le dessus de la surface (104) de l'élément diélectrique (40) dans un emplacement de fixation de shunt, une paire de languettes opposées (68) de verrouillage d'une extrémité fixe (54) étant positionnée au-dessus d'un évidement (70) ayant des côtés inclinés (106) et un bossage central (74) qui s'élève dans cet évidement ;
à plier les languettes (68) de verrouillage dans l'évidement (70) contre ses côtés inclinés (106) afin que des extrémités libres des languettes (68) de verrouillage soient adjacentes au bossage central (74) ;
à déformer en masse le bossage central (74) sur les extrémités libres des languettes de verrouillage, formant un joint (120) en retrait au-dessous de la surface (104) de l'élément diélectrique (40) entre les moyens de shuntage (52) et l'élément diélectrique (40).

6. Procédé de réalisation de l'ensemble de shuntage selon la revendication 3, comprenant les étapes qui consistent :
à positionner les moyens de shuntage (150, 250) à proximité immédiate dudit bord arrière (210) de l'élément diélectrique (140, 240) en un emplacement de fixation de shunt, l'axe longitudinal des moyens de shuntage (150, 250) ayant une orientation transversale audit bord arrière (210) et coplanaire avec la surface (214b) de l'élément diélectrique (140, 240) auquel les moyens de shuntage (150, 250) doivent être fixés ; et
à faire glisser les moyens de shuntage (150, 250) dans une direction parallèle à l'axe de shuntage sur la surface (214b) de l'élément diélectrique (140, 240) jusqu'à ce que la partie d'accrochage (158, 258) des moyens de shuntage (150, 250) pénètre dans la rainure correspondante à proximité du bord avant (212) et soit disposée au-dessous du pontet (80, 270), et que la partie de base (152, 252) soit disposée entre les saillies (216b) définissant la rainure et que ses bords latéraux (155a, 155b, 255) soient au-dessous des saillies opposées (220), et que la languette élastique (153, 253) passe au-dessus de la partie de l'élément diélectrique (140, 240) entre le bord arrière (210) et la surface d'arrêt (228) et s'accroche en arrière de la surface d'arrêt,
grâce à quoi les moyens de shuntage (150, 250) peuvent être assujettis à l'élément diélectrique (140, 240) uniquement par un mouvement de glissement des moyens de shuntage (150, 250), le long de la surface (214b) de l'élément diélectrique (140, 240).
